# EUROPEAN PATENT SPECIFICATION

(11) **EP 3 739 857 B1**
(45) Date of publication and mention of the grant of the patent: **25.03.2026**
(21) Application number: 18898233.4
(22) Date of filing: 27.12.2018
(51) Int. Cl.: H04M 1/2757, H04M 1/27457, H04M 1/72436, H04M 1/72445

(54) **ADDRESS BOOK CONTACT UPDATING METHOD, DEVICE, APPARATUS, AND STORAGE MEDIUM**
ADRESSBUCHKONTAKTAKTUALISIERUNGSVERFAHREN, VORRICHTUNG, EINRICHTUNG UND SPEICHERMEDIUM
PROCÉDÉ DE MISE À JOUR DE CONTACT DE CARNET D'ADRESSES, DISPOSITIF, APPAREIL ET SUPPORT DE STOCKAGE DE MISE À JOUR DE CONTACT DE CARNET D'ADRESSES

(30) Priority: 08.01.2018 CN 201810015527
(43) Date of publication of application: 18.11.2020
(73) Proprietor: ZTE Corporation, Shenzhen, Guangdong 518057 (CN)
(72) Inventor: GAO, Yang, Shenzhen, Guangdong 518057 (CN); ZHANG, Lu, Shenzhen, Guangdong 518057 (CN)
(74) Representative: Ipsilon
(86) International application number: PCT/CN2018/124198
(87) International publication number: WO 2019/134575

(56) References cited:
- EP-A1- 2 099 206
- CN-A- 104 702 760
- CN-A- 105 978 794
- CN-A- 106 412 056
- US-A1- 2014 108 579
- US-A1- 2015 113 440
- US-A1- 2016 277 417
- US-B1- 9 306 880
- US-B2- 9 876 740

## Description

### FIELD OF THE INVENTION

The present disclosure relates to, but is not limited to, the field of communication technology, and in particular, to a method, and an apparatus for updating a contact in an address book, and a storage medium.

### BACKGROUND

All operators are currently offering discount packages to new users for increasing their competitiveness. However, the users are worried that, after a new phone number is notified to related contacts via SMS or WeChat, the related contacts may not update the phone number in time, which causes much inconvenience.

The main reason why the related contacts may not update the phone number in time is that it is quite complicated to manually update it. For example, it is very inconvenient for some users to perform operations such as copying and pasting on a mobile phone.

In order to facilitate promoting their services and developing new users by the operators, the problem with new phone numbers of users should be solved.

### SUMMARY

The embodiments of the present disclosure provide a method and an apparatus for updating a contact in an address book, and a storage medium.

An embodiment of the present disclosure provides a method for updating a contact in an address according to claim 1.

An embodiment of the present disclosure provides an apparatus according to claim 7.

An embodiment of the present disclosure provides a storage medium having a program for updating a contact in an address book stored therein. When the program for updating a contact in an address book is executed by a processor, the steps of the above method for updating a contact in an address book are performed.

### BRIEF DESCRIPTION OF THE DRAWINGS

Fig. 1 is a flowchart illustrating a method for updating a contact in an address book according to an embodiment of the present disclosure;
Fig. 2 is a block diagram of a device for updating a contact in an address book according to an embodiment of the present disclosure;
Fig. 3 is a basic process of updating a contact in an address book according to an embodiment of the present disclosure (creating a new contact);
Fig. 4 is a basic process of updating a contact in an address book according to an embodiment of the present disclosure (adding to an existing contact);
Fig. 5 is an automatic matching process for updating a contact in an address book according to an embodiment of the present disclosure (there is a contact corresponding to an old phone number in an address book);
Fig. 6 is an automatic matching process for updating a contact in an address book according to an embodiment of the present disclosure (there is no contact corresponding to an old phone number in an address book);
Fig. 7 is an alternative process in a case where an App does not support automatic matching according to an embodiment of the present disclosure (there is a contact corresponding to an old phone number in an address book); and
Fig. 8 is an alternative process in a case where an App does not support automatic matching according to an embodiment of the present disclosure (there is no contact corresponding to an old phone number in an address book).

### DETAILED DESCRIPTION OF THE EMBODIMENTS

The preferable embodiments of the present disclosure will be described in detail below with reference to the accompanying drawings. It should be understood that the preferable embodiments described below are only for illustrating and explaining the present disclosure, but not for limiting the present disclosure.

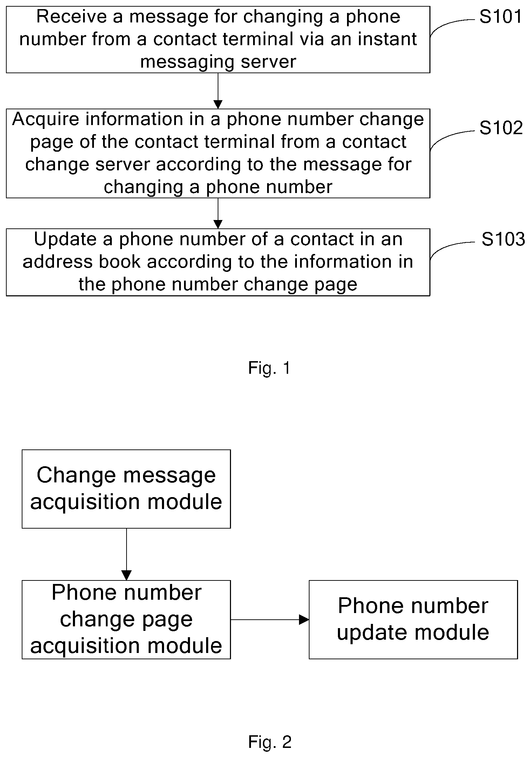

Fig. 1 is a flowchart illustrating a method for updating a contact in an address book according to an embodiment of the present disclosure. As shown in Fig. 1, the method includes:
step S101: receiving a message for changing a phone number from a contact terminal via an instant messaging server.

In this step, an instant messaging client of a user's terminal acquires the message for changing the phone number, which is sent from the contact terminal, from the instant messaging server. The message for changing the phone number includes a uniform resource locator for locating a phone number change page of the contact terminal, such as a link to the phone number change page of the contact terminal.

Step S102: acquiring information in the phone number change page of the contact terminal from a contact change server according to the message for changing the phone number.

In this step, the user's terminal clicks to open the message for changing the phone number in the instant messaging client, and acquires the information in the phone number change page of the contact terminal from the contact change server according to the opened message.

The user's terminal may also call a browser in the instant messaging client, and open the message for changing the phone number with the browser. And then, the user's terminal acquires the information in the phone number change page of the contact terminal from the contact change server according to the opened message, so as to realize automatic matching in the instant messaging applications which do not support automatic matching.

Step S103: updating the phone number of a contact in an address book according to the information in the phone number change page.

The information in the phone number change page may include a new phone number of the contact terminal. In such case, the user's terminal receives an instruction to create a new contact or an instruction to add a phone number to an existing contact from the user by using the instant messaging client, and updates the address book with the new phone number according to the received instruction.

The information in the phone number change page may further include an old phone number of the contact terminal. In such case, the user's terminal searches the address book for the old phone number by using the instant messaging client or the browser. If the old phone number and the corresponding contact are found in the address book, the old phone number of the contact in the address book may be updated with the new phone number. If the old phone number is not found in the address book, the contact is created in the address book and the new phone number is added thereto.

The information in the phone number change page may further include a type of change of the phone number of the contact terminal. When updating the phone number of the contact in the address book with the new phone number, the user's terminal replaces the old phone number of the contact in the address book with the new phone number by using the instant messaging client or the browser opened in the instant messaging client if the type of change is to replace an old phone number. If the type of change is to keep an old phone number, the user's terminal adds the new phone number to the contact in the address book by using the instant messaging client or the browser called in the instant messaging client.

Furthermore, when the phone number of the user's terminal is changed, the user's terminal edits a phone number change instruction page provided by the contact change server, sends the phone number change instruction page to the contact change server, acquires a message for changing a phone number from the contact change server afterwards, and sends the message for changing a phone number to the contacts of the user's terminal, so that the contacts of the user's terminal may update the phone number of the user's terminal.

It should be understood by those skilled in the art that all or part of the steps in the method according to the above embodiment may be implemented by instructing related hardware by a program, which may be stored in a computer-readable storage medium.

Furthermore, the present disclosure may further provide a storage medium having a program for updating a contact in an address book stored therein. When the program for updating a contact in an address book is executed by a processor, the steps of the above method for updating a contact in an address book are performed. The storage medium may include a read-only memory (ROM)/random-access memory (RAM), a magnetic disk, an optical disc and a USB flash drive.

Fig. 2 is a block diagram of a device for updating a contact in an address book according to an embodiment of the present disclosure. As shown in Fig. 2, the device may be configured to be an instant messaging application such as QQ or WeChat installed in a user's terminal, and includes:
a change message acquisition module configured to receive a message for changing a phone number from a contact terminal via an instant messaging server;
a phone number change page acquisition module configured to acquire information in a phone number change page of the contact terminal from a contact change server according to the message for changing the phone number; and
a phone number update module configured to update the phone number of a contact in an address book according to the information in the phone number change page.

Furthermore, the device further includes:
a changed phone number sharing module configured, when the phone number of the user's terminal is changed, to edit a phone number change instruction page provided by the contact change server, send the phone number change instruction page to the contact change server, acquire a message for changing a phone number from the contact change server afterwards, and send the message for changing a phone number to the contacts of the user's terminal via an instant messaging server.

A working process of the device is as follows:
during a process of updating a phone number of a contact, the change message acquisition module receives the message for changing a phone number, which is sent from the contact terminal, via the instant messaging server; the phone number change page acquisition module acquires the information in the phone number change page of the contact terminal from the contact change server according to the message for changing the phone number; and the phone number update module may manually or automatically match and update the phone number of the contact in the address book according to the information in the phone number change page. If the instant messaging application does not support automatic matching, the phone number change page acquisition module may call a browser in the instant messaging client, acquire the information in the phone number change page with the browser, and interact with a user's terminal system via the browser, so as to automatically update the phone number of the contact in the address book of the user's terminal.

During a process of updating the phone number of the user's terminal, the changed phone number sharing module accesses the contact change server and edits the information (such as the phone numbers before and after changing) of the user's terminal in the phone number change instruction page provided by the contact change server, then acquires the message for changing a phone number from the contact change server, and sends the message for changing a phone number to the contacts of the user's terminal via the instant messaging server, so that the contacts of the user's terminal may update their address books.

An embodiment of the present disclosure provides an apparatus for updating a contact in an address book, including a processor, and a memory coupled to the processor. The memory has a program for updating a contact in an address book, which can be executed by the processor, stored therein. When the program for updating a contact in an address book is executed by the processor, the steps of the above method for updating a contact in an address book are performed.

The embodiments of the present disclosure are based on a Web Server (or a contact update server), a party whose phone number has been changed triggers an update of a contact in an address book, and sends a Web message (a message for changing a phone number) to the other party, and the other party performs the update of a contact in an address book according to the Web message, so that the complexity of updating the phone number by the other party is greatly reduced. On the basis of the above processes, the present disclosure may further achieve automatic update, and allows one-click update of a contact in an address book by the other party.

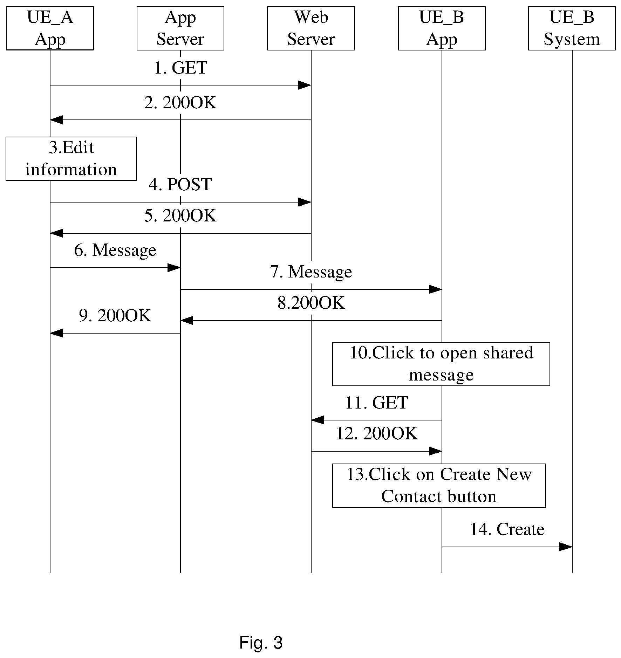

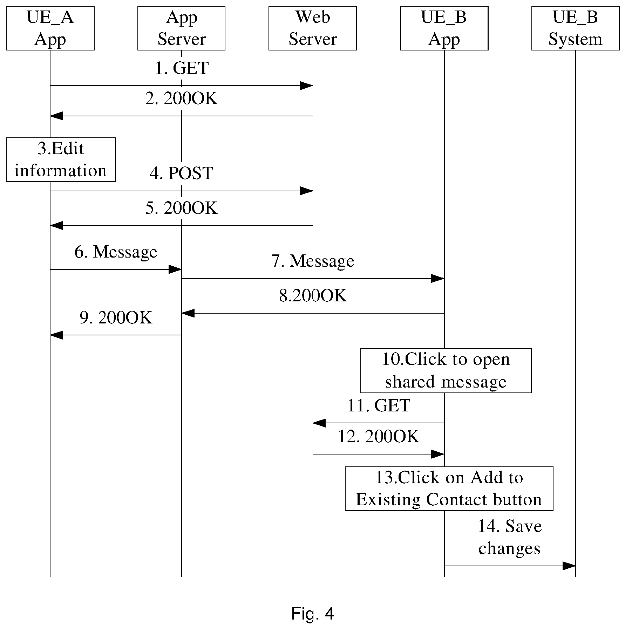

An embodiment of the present disclosure provides a process that may facilitate operations: a UE_A App interacts with a Web Server to generate a Web message about phone number change, and sends the Web message to a related person (such as a UE_B App) via an App; after receiving the Web message, the related person may choose to create a new contact or add to an existing contact by clicking, and operate and save an address book (the address book of the UE_B) according to instructions, as shown in Fig. 3 and Fig. 4.

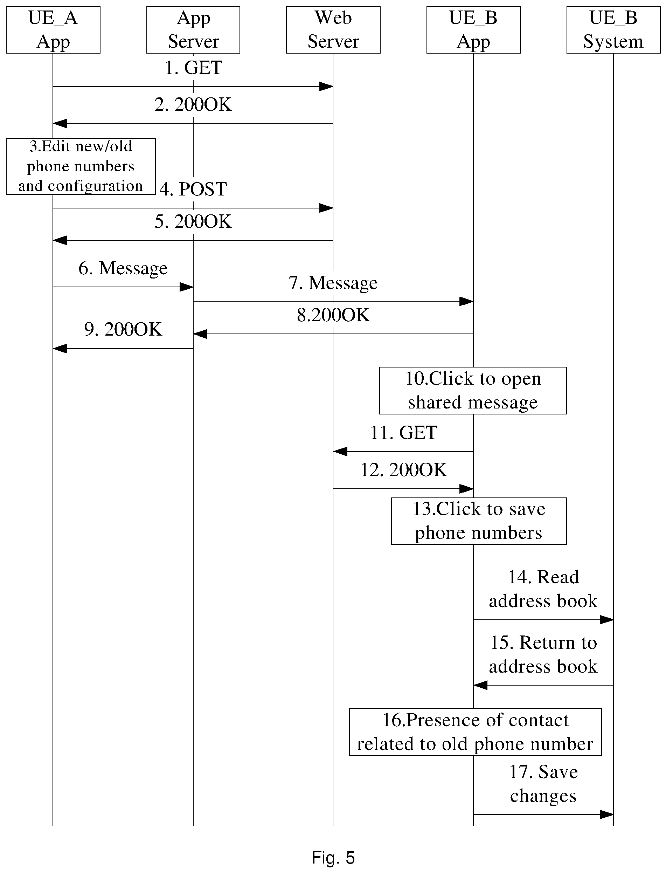

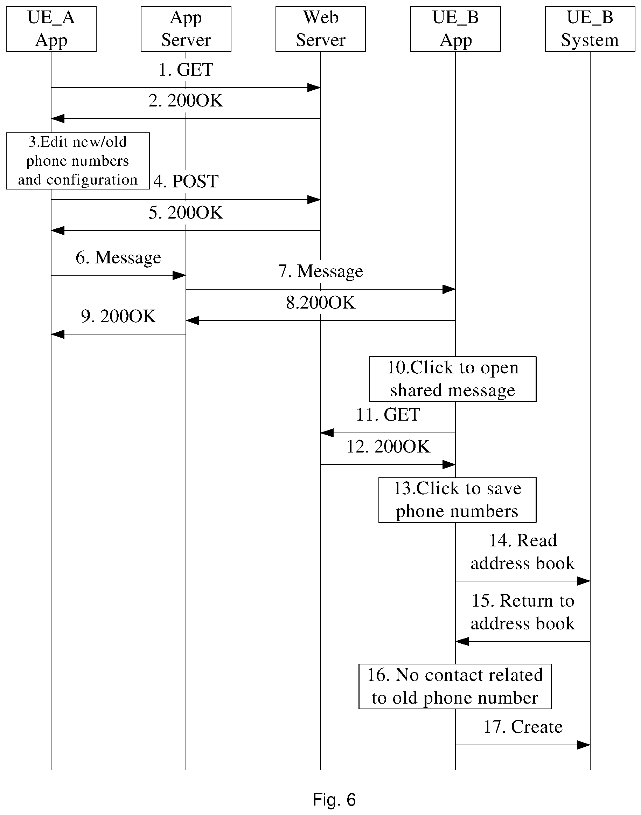

Furthermore, an embodiment of the present disclosure provides a process, in which a related person's App (for example, a UE_B App) automatically matches a Web of a UE_A with an address book of a UE_B by reading the address book, and saves the address book of the UE_B, as shown in Fig. 5 and Fig. 6.

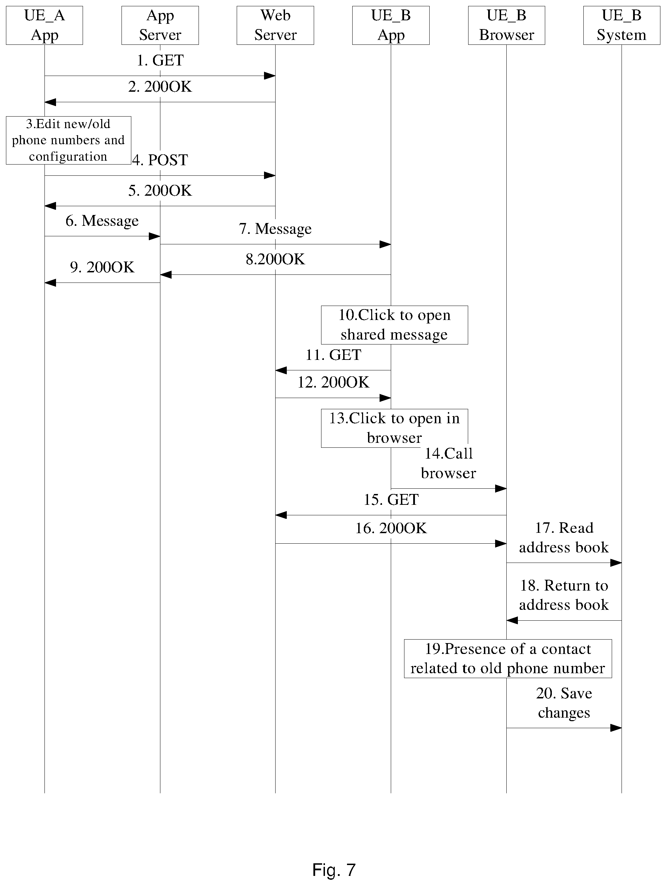

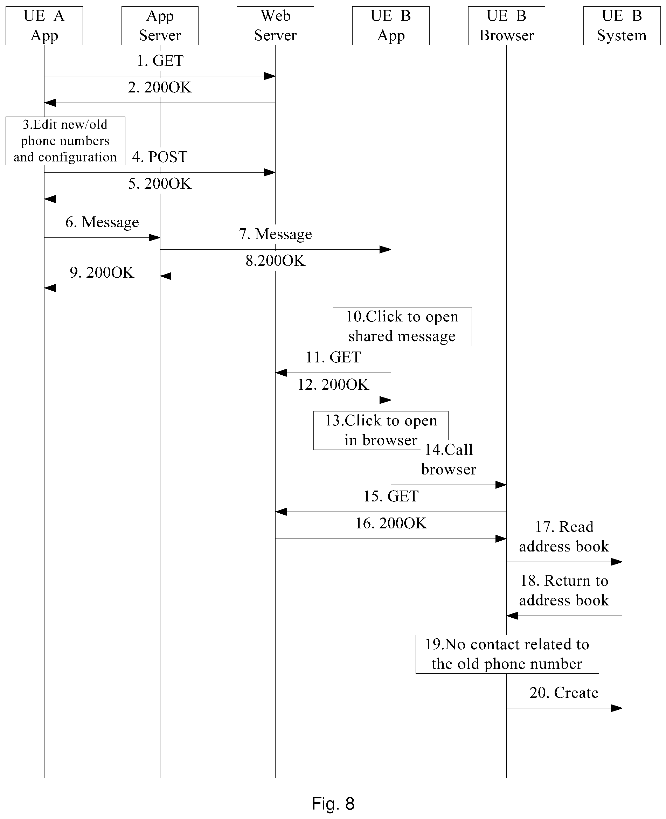

In the case where an App does not support reading an address book, an embodiment of the present disclosure further provides a solution for automatic matching. That is, the APP calls a browser, and automatic matching is performed in the browser, as shown in Fig. 7 and Fig. 8.

The above-mentioned APP may be QQ, WeChat or other instant messaging APPs.

An exemplary embodiment of the present disclosure will be illustrated below by taking WeChat as an example. The operators may provide the above functions in an applet of WeChat. For example, the applet is named "phone number change assistant" or the like. The operators provide the applet "phone number change assistant", which can be used by scanning a code, in their business halls or booths. A user may interact with a Web Server via the applet and fill in new and old phone numbers, and then may send a message to selected WeChat friends who need to be notified (may also send through broadcast messages, or within a WeChat group). After receiving the message, the other party may click on the message of the applet (a Web message), and perform one-click update of the contact in the address book according to page instructions.

Fig. 3 is a basic process of updating a contact in an address book according to an embodiment of the present disclosure (creating a new contact). As shown in Fig. 3, the specific process is as follows:
(1) a user accesses a Web Server via an App and sends an HTTP GET request. For example, WeChat allows a user to load the applet after scanning a code (such as a two-dimensional code of the phone number change assistant) and access the Web Server;
(2) the Web Server returns a phone number change instruction page, which is carried in 200 OK;
(3) the user edits information on the page;
(4) the App sends a POST request to the Web Server after the user submits the information;
(5) after receiving and accepting the request, the Web Server returns 200 OK that carries a Uniform Resource Identifier (URI) corresponding to phone number change of the user;
(6) the user forwards the above URI corresponding to the phone number change to a related person via an APP Server (or an instant messaging server). In the case where the App is WeChat, a message link is shared correspondingly; and the forwarding object may be a WeChat friend who needs to be notified (the forwarding may be realized through broadcast messages or within a WeChat group);
(7) the App Server forwards the message to the related person, such as UE_B;
(8) a UE_B App returns 200 OK;
(9) the App Server forwards 200 OK;
(10) a user of the UE_B clicks on the received message;
(11) the UE_B App requests a phone number change page of UE_A from the Web Server and sends a GET message;
(12) the Web Server returns 200 OK which carries a phone number page;
(13) the user clicks a Create New Contact button; and
(14) the UE_B App interacts with a system to process the phone number of the UE_A in a way of creating a new contact.

Fig. 4 is a basic process of updating a contact in an address book according to an embodiment of the present disclosure (adding to an existing contact). As shown in Fig. 4, the specific process is as follows:
(1) a user accesses a Web Server via an App and sends an HTTP GET request. For example, WeChat allows a user to load the applet after scanning a code (such as a two-dimensional code of the phone number change assistant) and access the Web Server;
(2) the Web Server returns a phone number change instruction page, which is carried in 200 OK;
(3) the user edits information on the page;
(4) the App sends a POST request to the Web Server after the user submits the information;
(5) after receiving and accepting the request, the Web Server returns 200 OK that carries a URI corresponding to phone number change of the user;
(6) the user forwards the above URI corresponding to the phone number change to a related person via an APP Server. In the case where the App is WeChat, a message link is shared correspondingly; and the forwarding object may be a WeChat friend who needs to be notified (the forwarding may be realized through broadcast messages or within a WeChat group);
(7) the App Server forwards the message to the related person, such as UE_B;
(8) a UE_B App returns 200 OK;
(9) the App Server forwards 200 OK;
(10) a user of the UE_B clicks on the received message;
(11) the UE_B App requests a phone number change page of UE_A from the Web Server and sends a GET message;
(12) the Web Server returns 200 OK which carries a phone number page;
(13) the user clicks an Add to Existing Contact button; and
(14) the UE_B App interacts with a system to process the phone number of the UE_A in a way of adding to an existing contact.

Fig. 5 is an automatic matching process for updating a contact in an address book according to an embodiment of the present disclosure (there is a contact corresponding to an old phone number in an address book). As shown in Fig. 5, the specific process is as follows:
(1) a user accesses a Web Server via an App and sends an HTTP GET request. For example, WeChat allows a user to load the applet after scanning a code (such as a two-dimensional code of the phone number change assistant) and access the Web Server;
(2) the Web Server returns a phone number change instruction page, which is carried in 200 OK;
(3) the user edits new and old phone numbers on the page. For example, the user may enter a new phone number, enter an old phone number, replace an old phone number, or keep an old phone number. In this embodiment, an old phone number is replaced by default.
(4) the App sends a POST request to the Web Server after the user submits the numbers;
(5) after receiving and accepting the request, the Web Server returns 200 OK that carries a URI corresponding to phone number change of the user;
(6) the user forwards the above URI corresponding to the phone number change to a related person via an APP Server. In the case where the App is WeChat, a message link is shared correspondingly; and the forwarding object may be a WeChat friend who needs to be notified (the forwarding may be realized through broadcast messages or within a WeChat group);
(7) the App Server forwards the message to the related person, such as UE_B;
(8) a UE_B App returns 200 OK;
(9) the App Server forwards 200 OK;
(10) a user of the UE_B clicks on the received message;
(11) the UE_B App requests a phone number change page of UE_A from the Web Server and sends a GET message;
(12) the Web Server returns 200 OK which carries a phone number page;
(13) the user clicks on the page to save the phone numbers;
(14) the UE_B App reads an address book;
(15) a system returns the address book;
(16) the UE_B App searches the existing address book for the old phone number, and finds out a contact corresponding to the old phone number; and
(17) the UE_B App replaces the existing phone number of the contact with the new phone number.

Fig. 6 is an automatic matching process for updating a contact in an address book according to an embodiment of the present disclosure (there is no contact corresponding to an old phone number in an address book). As shown in Fig. 6, the specific process is as follows:
(1) a user accesses a Web Server via an App and sends an HTTP GET request. For example, WeChat allows a user to load the applet after scanning a code (such as a two-dimensional code of the phone number change assistant) and access the Web Server;
(2) the Web Server returns a phone number change instruction page, which is carried in 200 OK;
(3) the user edits new and old phone numbers on the page. For example, the user may enter a new phone number, enter an old phone number, replace an old phone number, or keep an old phone number. In this embodiment, an old phone number is replaced by default.
(4) the App sends a POST request to the Web Server after the user submits the numbers;
(5) after receiving and accepting the request, the Web Server returns 200 OK that carries a URI corresponding to phone number change of the user;
(6) the user forwards the above URI corresponding to the phone number change to a related person via an APP Server. In the case where the App is WeChat, a message link is shared correspondingly; and the forwarding object may be a WeChat friend who needs to be notified (the forwarding may be realized through broadcast messages or within a WeChat group);
(7) the App Server forwards the message to the related person, such as UE_B;
(8) a UE_B App returns 200 OK;
(9) the App Server forwards 200 OK;
(10) a user of the UE_B clicks on the received message;
(11) the UE_B App requests a phone number change page of UE_A from the Web Server and sends a GET message;
(12) the Web Server returns 200 OK which carries a phone number page;
(13) the user clicks on the page to save the phone numbers;
(14) the UE_B App reads an address book;
(15) a system returns the address book;
(16) the UE_B App searches an existing address book for the old phone number, but does not find a contact corresponding to the old phone number; and
(17) the UE_B App creates a new contact and adds the new phone number thereto.

At present, WeChat provides a function of reading an address book for applets, and the processes illustrated in Fig. 7 and Fig. 8 should be followed if automatic matching is to be implemented in WeChat.

Fig. 7 is an alternative process in a case where an App does not support automatic matching according to an embodiment of the present disclosure (there is a contact corresponding to an old phone number in an address book). As shown in Fig. 7, the specific process is as follows:
(1) a user accesses a Web Server via an App and sends an HTTP GET request. For example, WeChat allows a user to load the applet after scanning a code (such as a two-dimensional code of the phone number change assistant) and access the Web Server;
(2) the Web Server returns a phone number change instruction page, which is carried in 200 OK;
(3) the user edits new and old phone numbers on the page. For example, the user may enter a new phone number, enter an old phone number, replace an old phone number, or keep an old phone number. In this embodiment, an old phone number is replaced by default.
(4) the App sends a POST request to the Web Server after the user submits the numbers;
(5) after receiving and accepting the request, the Web Server returns 200 OK that carries a URI corresponding to phone number change of the user;
(6) the user forwards the above URI corresponding to the phone number change to a related person via an APP Server. In the case where the App is WeChat, a message link is shared correspondingly; and the forwarding object may be a WeChat friend who needs to be notified (the forwarding may be realized through broadcast messages or within a WeChat group);
(7) the App Server forwards the message to the related person, such as UE_B;
(8) a UE_B App returns 200 OK;
(9) the App Server forwards 200 OK;
(10) a user of the UE_B clicks on the received message;
(11) the UE_B App requests a phone number change page of UE_A from the Web Server and sends a GET message;
(12) the Web Server returns 200 OK which carries a phone number page;
(13) the page prompts that the current APP does not support automatic matching and thus it may be selected to perform operations in a manual way (as shown in Fig. 1 and Fig. 2) or by opening in a browser. The user clicks a button to open in a browser in the App;
(14) the UE_B App calls a UE_B Browser;
(15) the UE_B Browser requests a phone number change page of UE_A from the Web Server and sends a GET message;
(16) the Web Server returns 200 OK which carries a phone number page;
(17) the UE_B Browser reads an address book;
(18) a system returns the address book;
(19) the UE_B Browser searches the existing address book for the old phone number, and finds out a contact corresponding to the old phone number; and
(20) the UE_B Browser replaces the old phone number with the new phone number.

Fig. 8 is an alternative process in a case where an App does not support automatic matching according to an embodiment of the present disclosure (there is no contact corresponding to an old phone number in an address book). As shown in Fig. 8, the specific process is as follows:
(1) a user accesses a Web Server via an App and sends an HTTP GET request. For example, WeChat allows a user to load the applet after scanning a code (such as a two-dimensional code of the phone number change assistant) and access the Web Server;
(2) the Web Server returns a phone number change instruction page, which is carried in 200 OK;
(3) the user edits new and old phone numbers on the page. For example, the user may enter a new phone number, enter an old phone number, replace an old phone number, or keep an old phone number. In this embodiment, an old phone number is replaced by default.
(4) the App sends a POST request to the Web Server after the user submits the numbers;
(5) after receiving and accepting the request, the Web Server returns 200 OK that carries a URI corresponding to phone number change of the user;
(6) the user forwards the above URI corresponding to the phone number change to a related person via an APP Server. In the case where the App is WeChat, a message link is shared correspondingly; and the forwarding object may be a WeChat friend who needs to be notified (the forwarding may be realized through broadcast messages or within a WeChat group);
(7) the App Server forwards the message to the related person, such as UE_B;
(8) a UE_B App returns 200 OK;
(9) the App Server forwards 200 OK;
(10) a user of the UE_B clicks on the received message;
(11) the UE_B App requests a phone number change page of UE_A from the Web Server and sends a GET message;
(12) the Web Server returns 200 OK which carries a phone number page;
(13) the page prompts that the current APP does not support automatic matching and thus it may be selected to perform operations in a manual way (as shown in Fig. 1 and Fig. 2) or by opening in a browser. The user clicks a button to open in a browser in the App;
(14) the UE_B App calls a UE_B Browser;
(15) the UE_B Browser requests a phone number change page of UE_A from the Web Server and sends a GET message;
(16) the Web Server returns 200 OK which carries a phone number page;
(17) the UE_B Browser reads an address book;
(18) a system returns the address book;
(19) the UE_B Browser searches the existing address book for the old phone number, but does not find a contact corresponding to the old phone number; and
(20) the UE_B Browser creates a new contact for the new phone number.

To sum up, the embodiments of the present disclosure have the following technical effects:

the embodiments of the present disclosure may enable a user to notify related persons to conveniently update the user in their address books after the user changes his phone number, so that the operators may provide greater convenience for users when promoting their services and developing new users.

Although the present disclosure is described in detail above, the present disclosure is not limited thereto, and various modifications may be made by those skilled in the art in accordance with the principle of the present disclosure.

## Claims

1. A method for updating a contact in an address book, comprising:
receiving (S101) a message for changing a phone number from a contact terminal via an instant messaging server;
acquiring (S102) information in a phone number change page of the contact terminal from a contact change server according to the message for changing the phone number; and
updating (S103) the phone number of a contact in an address book according to the information in the phone number change page;
the method further comprising:
when the phone number of the contact terminal is changed, editing a phone number change instruction page provided by the contact change server, and sending the phone number change instruction page to the contact change server; and
acquiring a message for changing a phone number from the contact change server afterwards, and sending the message for changing a phone number to the contact.

2. The method of claim 1, wherein the message for changing the phone number comprises a uniform resource locator for locating the phone number change page of the contact terminal.

3. The method of claim 1, wherein the step of acquiring (S102) the information in the phone number change page of the contact terminal from the contact change server according to the message for changing the phone number comprises:
opening the message for changing the phone number by using an instant messaging client or a browser called in the instant messaging client, and acquiring the information in the phone number change page of the contact terminal from the contact change server according to the message.

4. The method of claim 3, wherein the information in the phone number change page comprises a new phone number of the contact terminal, and the step of updating (S103) the phone number of the contact in the address book according to the information in the phone number change page comprises:
receiving an instruction to create a new contact or an instruction to add a phone number to an existing contact from a user by using the instant messaging client, and updating the address book with the new phone number according to the received instruction.

5. The method of claim 3, wherein the information in the phone number change page comprises an old phone number and a new phone number of the contact terminal, and the step of updating (S103) the phone number of the contact in the address book according to the information in the phone number change page comprises:
searching the address book for the old phone number by using the instant messaging client or the browser called in the instant messaging client, and
updating the phone number of the contact in the address book with the new phone number if the old phone number and a related contact are found in the address book; or
creating a new contact and adding the new phone number to the address book if the old phone number is not found in the address book.

6. The method of claim 5, wherein the information in the phone number change page further comprises a type of change of the phone number of the contact terminal, and the step of updating (S103) the phone number of the contact in the address book according to the information in the phone number change page comprises:
if the type of change is to replace an old phone number, replacing the old phone number of the contact in the address book with the new phone number by using the instant messaging client or the browser called in the instant messaging client; or
if the type of change is to keep an old phone number, adding the new phone number to the contact in the address book by using the instant messaging client or the browser called in the instant messaging client.

7. An apparatus for updating a contact in an address book, comprising: a processor, and a memory coupled to the processor,
wherein the memory stores a program for updating a contact in an address book, which is executable by the processor, and the steps of the method for updating a contact in an address book of any one of claims 1 to 6 are performed when the program for updating a contact in an address book is executed by the processor.

8. A storage medium storing a program for updating a contact in an address book, wherein, the steps of the method for updating a contact in an address book of any one of claims 1 to 6 are performed when the program for updating a contact in an address book is executed by a processor.

## Patentansprüche

1. Verfahren zum Aktualisieren eines Kontakts in einem Adressbuch, das umfasst:
Empfangen (S101) einer Nachricht zum Ändern einer Telefonnummer von einem Kontaktendgerät über einen Instant Messaging-Server;
Erfassen (S102) von Informationen in einer Telefonnummernänderungsseite des Kontaktendgeräts von einem Kontaktänderungsserver gemäß der Nachricht zum Ändern der Telefonnummer und
Aktualisieren (S103) der Telefonnummer eines Kontakts in einem Adressbuch gemäß den Informationen in der Telefonnummernänderungsseite;
wobei das Verfahren ferner umfasst:
wenn die Telefonnummer des Kontaktendgeräts geändert wird, Bearbeiten einer Telefonnummernänderungsanweisungsseite, die durch den Kontaktänderungsserver bereitgestellt wird, und Senden der Telefonnummernänderungsanweisungsseite an den Kontaktänderungsserver; und
anschließendes Erfassen einer Nachricht zum Ändern einer Telefonnummer vom Kontaktänderungsserver und Senden der Nachricht zum Ändern einer Telefonnummer an den Kontakt.

2. Verfahren nach Anspruch 1, wobei die Nachricht zum Ändern der Telefonnummer einen Uniform Resource Locator zum Lokalisieren der Telefonnummernänderungsseite des Kontaktendgeräts umfasst.

3. Verfahren nach Anspruch 1, wobei der Schritt des Erfassens (S102) der Informationen in der Telefonnummernänderungsseite des Kontaktendgeräts vom Kontaktänderungsserver gemäß der Nachricht zum Ändern der Telefonnummer umfasst:
Öffnen der Nachricht zum Ändern der Telefonnummer durch Verwenden eines Instant Messaging-Clients oder eines Browsers, der im Instant Messaging-Client aufgerufen wird, und Erfassen der Informationen in der Telefonnummernänderungsseite des Kontaktendgeräts vom Kontaktänderungsserver gemäß der Nachricht.

4. Verfahren nach Anspruch 3, wobei die Informationen in der Telefonnummernänderungsseite eine neue Telefonnummer des Kontaktendgeräts umfassen und der Schritt des Aktualisierens (S103) der Telefonnummer des Kontakts im Adressbuch gemäß den Informationen in der Telefonnummernänderungsseite umfasst:
Empfangen einer Anweisung zum Erstellen eines neuen Kontakts oder einer Anweisung zum Hinzufügen einer Telefonnummer zu einem bestehenden Kontakt von einem Benutzer durch Verwenden des Instant Messaging-Clients und Aktualisieren des Adressbuchs mit der neuen Telefonnummer gemäß der empfangenen Anweisung.

5. Verfahren nach Anspruch 3, wobei die Informationen in der Telefonnummernänderungsseite eine alte Telefonnummer und eine neue Telefonnummer des Kontaktendgeräts umfassen und der Schritt des Aktualisierens (S103) der Telefonnummer des Kontakts im Adressbuch gemäß den Informationen in der Telefonnummernänderungsseite umfasst:
Durchsuchen des Adressbuchs nach der alten Telefonnummer durch Verwenden des Instant Messaging-Clients oder des Browsers, der im Instant Messaging-Client aufgerufen wird, und
Aktualisieren der Telefonnummer des Kontakts im Adressbuch mit der neuen Telefonnummer, wenn die alte Telefonnummer und ein zugehöriger Kontakt im Adressbuch gefunden werden; oder
Erstellen eines neuen Kontakts und Hinzufügen der neuen Telefonnummer zum Adressbuch, wenn die alte Telefonnummer nicht im Adressbuch gefunden wird.

6. Verfahren nach Anspruch 5, wobei die Informationen in der Telefonnummernänderungsseite ferner eine Art von Änderung der Telefonnummer des Kontaktendgeräts umfassen und der Schritt des Aktualisierens (S103) der Telefonnummer des Kontakts im Adressbuch gemäß den Informationen in der Telefonnummernänderungsseite umfasst:
wenn die Art der Änderung darin besteht, eine alte Telefonnummer zu ersetzen, Ersetzen der alten Telefonnummer des Kontakts im Adressbuch durch die neue Telefonnummer durch Verwenden des Instant Messaging-Clients oder des Browsers, der im Instant Messaging-Client aufgerufen wird; oder
wenn die Art der Änderung darin besteht, eine alte Telefonnummer beizubehalten, Hinzufügen der neuen Telefonnummer zum Kontakt im Adressbuch durch Verwenden des Instant Messaging-Clients oder des Browsers, der im Instant Messaging-Client aufgerufen wird.

7. Einrichtung zum Aktualisieren eines Kontakts in einem Adressbuch, die umfasst: einen Prozessor und einen Speicher, der mit dem Prozessor gekoppelt ist,
wobei der Speicher ein Programm zum Aktualisieren eines Kontakts in einem Adressbuch speichert, das durch den Prozessor ausführbar ist, und die Schritte des Verfahrens zum Aktualisieren eines Kontakts in einem Adressbuch nach einem der Ansprüche 1 bis 6 durchgeführt werden, wenn das Programm zum Aktualisieren eines Kontakts in einem Adressbuch durch den Prozessor ausgeführt wird.

8. Speichermedium, das ein Programm zum Aktualisieren eines Kontakts in einem Adressbuch speichert, wobei die Schritte des Verfahrens zum Aktualisieren eines Kontakts in einem Adressbuch nach einem der Ansprüche 1 bis 6 durchgeführt werden, wenn das Programm zum Aktualisieren eines Kontakts in einem Adressbuch durch einen Prozessor ausgeführt wird.

## Revendications

1. Procédé de mise à jour d'un contact dans un carnet d'adresses, comprenant :
la réception (S101) d'un message permettant de changer un numéro de téléphone en provenance d'un terminal de contact par le biais d'un serveur de messagerie instantanée ;
l'acquisition (S102) d'informations dans une page de changement de numéro de téléphone du terminal de contact à partir d'un serveur de changement de contact en fonction du message de changement de numéro de téléphone ; et
la mise à jour (S103) du numéro de téléphone d'un contact dans un carnet d'adresses en fonction des informations contenues dans la page de changement de numéro de téléphone ;
le procédé comprenant en outre :
lorsque le numéro de téléphone du terminal de contact est modifié, la modification d'une page d'instructions de changement de numéro de téléphone fournie par le serveur de changement de contact, et l'envoi de la page d'instructions de changement de numéro de téléphone au serveur de changement de contact ; et
l'acquisition d'un message pour modifier un numéro de téléphone à partir du serveur de changement de contact par la suite, et l'envoi du message pour modifier un numéro de téléphone au contact.

2. Procédé selon la revendication 1, dans lequel le message pour changer le numéro de téléphone comprend une adresse URL pour localiser la page de changement de numéro de téléphone du terminal de contact.

3. Procédé selon la revendication 1, dans lequel l'étape d'acquisition (S102) des informations dans la page de changement de numéro de téléphone du terminal de contact à partir du serveur de changement de contact en fonction du message de changement de numéro de téléphone comprend :
l'ouverture du message pour modifier le numéro de téléphone à l'aide d'un client de messagerie instantanée ou d'un navigateur appelé dans le client de messagerie instantanée, et l'acquisition des informations dans la page de changement de numéro de téléphone du terminal de contact à partir du serveur de changement de contact en fonction du message.

4. Procédé selon la revendication 3, dans lequel les informations dans la page de changement de numéro de téléphone comprennent un nouveau numéro de téléphone du terminal de contact, et l'étape de mise à jour (S103) du numéro de téléphone du contact dans le carnet d'adresses en fonction des informations dans la page de changement de numéro de téléphone comprend :
la réception d'une instruction pour créer un nouveau contact ou d'une instruction pour ajouter un numéro de téléphone à un contact existant d'un utilisateur à l'aide du client de messagerie instantanée, et la mise à jour du carnet d'adresses avec le nouveau numéro de téléphone en fonction de l'instruction reçue.

5. Procédé selon la revendication 3, dans lequel les informations dans la page de changement de numéro de téléphone comprennent un ancien numéro de téléphone et un nouveau numéro de téléphone du terminal de contact, et l'étape de mise à jour (S103) du numéro de téléphone du contact dans le carnet d'adresses en fonction des informations dans la page de changement de numéro de téléphone comprend :
la recherche dans le carnet d'adresses de l'ancien numéro de téléphone à l'aide du client de messagerie instantanée ou du navigateur appelé dans le client de messagerie instantanée, et
la mise à jour du numéro de téléphone du contact dans le carnet d'adresses avec le nouveau numéro de téléphone si l'ancien numéro de téléphone et un contact associé se trouvent dans le carnet d'adresses ; ou
la création d'un nouveau contact et l'ajout du nouveau numéro de téléphone au carnet d'adresses si l'ancien numéro de téléphone ne se trouve pas dans le carnet d'adresses.

6. Procédé selon la revendication 5, dans lequel les informations dans la page de changement de numéro de téléphone comprennent en outre un type de changement du numéro de téléphone du terminal de contact, et l'étape de mise à jour (S103) du numéro de téléphone du contact dans le carnet d'adresses en fonction des informations dans la page de changement de numéro de téléphone comprend :
si le type de modification consiste à remplacer un ancien numéro de téléphone, le remplacement de l'ancien numéro de téléphone du contact dans le carnet d'adresses par le nouveau numéro de téléphone à l'aide du client de messagerie instantanée ou du navigateur appelé dans le client de messagerie instantanée ; ou
si le type de modification consiste à conserver un ancien numéro de téléphone, l'ajout du nouveau numéro de téléphone au contact dans le carnet d'adresses à l'aide du client de messagerie instantanée ou du navigateur appelé dans le client de messagerie instantanée.

7. Appareil de mise à jour d'un contact dans un carnet d'adresses, comprenant : un processeur, et une mémoire couplée au processeur,
dans lequel la mémoire stocke un programme de mise à jour d'un contact dans un carnet d'adresses, qui est exécutable par le processeur, et les étapes du procédé de mise à jour d'un contact dans un carnet d'adresses selon l'une quelconque des revendications 1 à 6 sont exécutées lorsque le programme de mise à jour d'un contact dans un carnet d'adresses est exécuté par le processeur.

8. Support de stockage stockant un programme de mise à jour d'un contact dans un carnet d'adresses, dans lequel les étapes du procédé de mise à jour d'un contact dans un carnet d'adresses selon l'une quelconque des revendications 1 à 6 sont exécutées lorsque le programme de mise à jour d'un contact dans un carnet d'adresses est exécuté par un processeur.
